# EUROPEAN PATENT SPECIFICATION

(11) **EP 2 775 735 B1**
(45) Date of publication and mention of the grant of the patent: **23.10.2019**
(21) Application number: 12845542.5
(22) Date of filing: 10.07.2012
(51) Int. Cl.: G01S 7/521, H04R 17/00, G10K 9/22, G01H 11/08, B06B 1/06, G01S 15/93

(54) **ULTRASONIC SENSOR**
ULTRASCHALLSENSOR
CAPTEUR ULTRASONORE

(30) Priority: 31.10.2011 JP 2011239339
(43) Date of publication of application: 10.09.2014
(73) Proprietor: Murata Manufacturing Co., Ltd., Nagaokakyo-shi, Kyoto 617-8555 (JP)
(72) Inventor: SATO, Takehiro, Nagaokakyo-shi Kyoto 617-8555 (JP)
(74) Representative: Reeve, Nicholas Edward
(86) International application number: PCT/JP2012/067538
(87) International publication number: WO 2013/065359

(56) References cited:
- WO-A1-2011/081662
- DE-T2- 69 738 107
- JP-A- H11 266 498
- JP-A- 2003 302 384
- JP-A- 2010 230 114
- US-A1- 2002 130 770

## Description

### Technical Field

The present invention relates to an ultrasonic sensor including a piezoelectric device coupled to a casing, for example, to an ultrasonic sensor used as a car corner sonar, a car back sonar, or other devices.

### Background Art

An ultrasonic sensor detects obstacles or targets by intermittently transmitting ultrasonic pulse signals and receiving reflected waves (see, for example, Japanese Unexamined Patent Application Publication No. 2010-123603). Ultrasonic sensors are used as, for example, a car back sonar, a car corner sonar, and a parking spot sensor that detects, at the time of roadside parking, whether there is a sufficient space between the car and the obstacle such as a side wall.

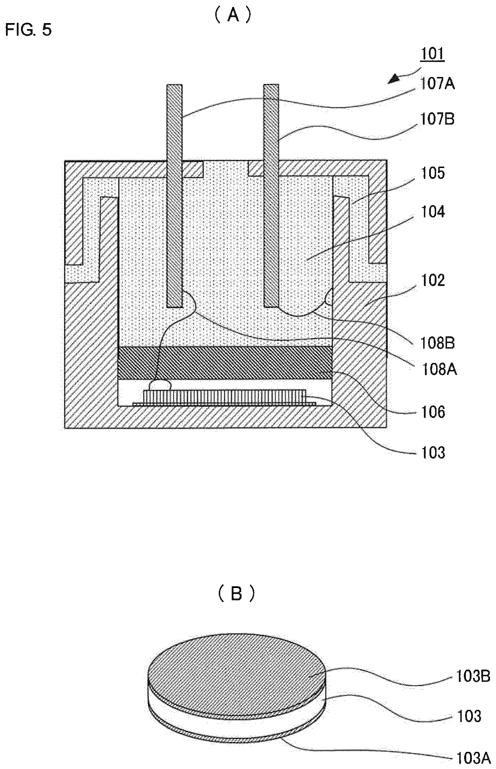

Fig. 5(A) illustrates an example of a configuration of an existing ultrasonic sensor viewed in a cross section. An ultrasonic sensor 101 includes a casing 102, a piezoelectric device 103, a sound absorbing member 106, a damping member 104, pin terminals 107A and 107B, and lead wires 108A and 108B. The casing 102 has a closed-end tube shape and is made of a material such as an electrically conductive metal. The piezoelectric device 103 is attached to an inner bottom surface of the casing 102 with an electrically conductive adhesive or the like. Fig. 5(B) schematically illustrates an example of a configuration of the piezoelectric device 103. The piezoelectric device 103 includes drive electrodes 103A and 103B on both main surfaces.

As illustrated in Fig. 5(A), end portions of the pin terminals 107A and 107B are inserted into the opening of the casing 102. The damping member 104 is used to encapsulate the end portions of the pin terminals 107A and 107B in the opening of the casing 102. The lead wire 108B connects the end of the pin terminal 107B and the casing 102 together and is electrically connected to the drive electrode 103A on the lower side of the piezoelectric device 103 through the casing 102. The lead wire 108A connects the end of the pin terminal 107A and the drive electrode 103B on the upper side of the piezoelectric device 103 together.

In the ultrasonic sensor 101 having the above-described configuration, the damping member 104 is provided to minimize the reverberations of the casing 102 and to prevent unnecessary vibrations from being transmitted to the pin terminals 107A and 107B. Typically, a viscoelastic material such as a silicone resin or a polyurethane is used as a material of the damping member 104.

Ultrasonic sensors used as, for example, a car back sonar, a car corner sonar, or a parking spot sensor, are generally required to satisfy the performance requirements under the condition within the temperature range from approximately -40°C to approximately 85°C. One of the performance requirements that the ultrasonic sensor has to satisfy is a reverberation characteristic; minimizing the maximum value of the reverberation time is generally required. It is known that the reverberation characteristic (maximum value of the reverberation time) of the ultrasonic sensor is affected by the material and the properties, particularly, the loss modulus of the damping member.

The loss modulus of the viscoelastic material used for the damping member is temperature dependent. As the temperature approaches a very low glass-transition temperature (or as the temperature decreases), the loss modulus increases and the damping member is hardened. Even if the loss modulus is appropriate and the reverberation characteristic is favorable at a certain temperature, it does not assure that the reverberation characteristic is favorable throughout the entire actual-use temperature range (for example, -40°C to 85°C). In the case of a polyurethane, for example, the glass-transition temperature is around -40°C. As the temperature decreases from the room temperature, the loss modulus gradually increases. As the temperature approaches -40°C, the loss modulus rapidly increases. A silicone resin, on the other hand, has a glass-transition temperature lower than -40°C and a loss modulus substantially constant throughout the entire actual-use temperature range.

If the loss modulus at which the reverberation characteristic is favorable is constant throughout the entire actual-use temperature range, the use of a silicone resin would make the reverberation characteristic favorable throughout the entire actual-use temperature range. However, the inventor of the present application has found that the loss modulus itself at which the reverberation characteristic is favorable is actually temperature dependent. Thus, although the use of a silicone successfully makes the reverberation characteristic favorable at the room temperature, it is difficult to make a reverberation characteristic favorable throughout the entire actual-use temperature range (particularly in a range of very low temperature) due to the very low loss modulus.

With regard to polyurethanes, the loss modulus is adjustable by changing conditions, such as the quantity or composition of fillers to be mixed or the conditions for curing. Such conditions are controllable so that a favorable reverberation characteristic is obtained at a very low temperature. If controlled, however, a favorable reverberation characteristic cannot be obtained at the room temperature. Polyurethanes, however, are more preferably used for a vibration damper than silicone resins in terms that polyurethanes are less costly and more impervious to water than silicone resins.

DE 697 38 107 T2 discloses an energy conversion composition for absorbing and damping kinetic, thermal, optical, or electrical energy.

WO 2011/081662 A1 discloses polyurethane compositions for composite structures, the compositions including polyisocyanate.

US 2002/0130770 A1 discloses a proximity sensor comprising transceiver means for transmitting a signal and receiving a return signal reflected off of an object within a range of the transceiver means and a thermoplastic compound surrounding the transceiver means.

We have appreciated that it would be desirable to provide an ultrasonic sensor that includes a vibration damper mainly containing a polyurethane and that can have a favorable reverberation characteristic throughout the substantially entire actual-use temperature range.

### SUMMARY OF THE INVENTION

An ultrasonic sensor according to the present invention includes a casing, a piezoelectric device, a terminal portion, and a vibration damper. The casing has a closed-end tubular shape and has a vibration area at the bottom surface. The piezoelectric device is disposed in an opening of the casing and attached to the vibration area. The terminal portion has an end portion that is disposed in the opening of the casing and the terminal portion extends from inside the opening of the casing to outside the opening of the casing. The vibration damper contains a mixture of inorganic filler and a polyol-based polyurethane, and is inserted into the opening of the casing. In this configuration, the vibration damper contains a material having a glass-transition temperature lower than the lower limit temperature of an actual-use temperature range and a loss modulus versus temperature characteristic having a peak centered at the glass transition temperature, wherein a point of inflection located on a high-temperature side of the peak is out of the actual-use temperature range. The vibration damper has a loss modulus exceeding 0.2 Mpa at a room temperature, and the vibration damper has a loss modulus below 53.5 Mpa throughout the entire actual-use temperature range.

Although the actual-use temperature range may vary depending on the conditions, such as, the purposes of use of the ultrasonic sensor, the range used in the present invention is between -40°C and 85°C. The sensor may be used, for example, for a car.

In addition, the vibration damper has a loss modulus versus temperature characteristic in which a temperature range corresponding to a width of 3 dB at the peak having the glass-transition temperature at the center lies below the lower limit temperature of the actual-use temperature range. It is preferable that the vibration damper have a loss modulus versus temperature characteristic in which a temperature range corresponding to a width of 5 dB or larger at the peak having the glass-transition temperature at the center lies below the lower limit temperature of the actual-use temperature range.

In the above-described ultrasonic sensor according to the invention, the vibration damper has a loss modulus exceeding 1.5 Mpa at the lower limit temperature (approximately -40°C) of the actual-use temperature range and a loss modulus exceeding 0.2 Mpa at a room temperature (approximately 25°C). In addition, it is preferable that the vibration damper have a loss modulus below 53.5 Mpa throughout the entire actual-use temperature range.

### BRIEF DESCRIPTION OF DRAWINGS

Fig. 1 illustrates an example of a configuration of an ultrasonic sensor according to a first embodiment of the present invention.
Fig. 2 illustrates the relationship between a loss modulus and reverberation time.
Fig. 3 illustrates temperature characteristics in the case of an example and comparative examples.
Fig. 4 illustrates an example of a configuration of an ultrasonic sensor according to a second embodiment of the present invention.
Fig. 5 illustrates an example of a configuration of an existing ultrasonic sensor in a cross section.

### DESCRIPTION OF EMBODIMENTS

### First Embodiment

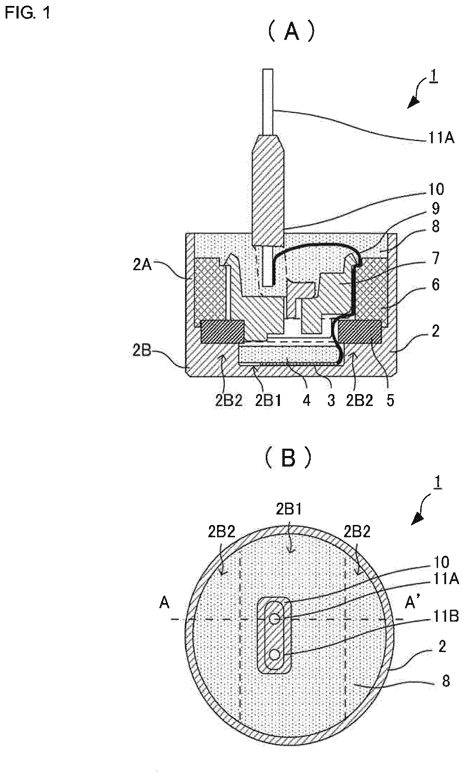

Fig. 1(A) is a cross sectional view of an ultrasonic sensor 1 according to a first embodiment of the present invention taken along the line A-A' in Fig. 1(B). Fig. 1(B) is a back view of the ultrasonic sensor 1.

The ultrasonic sensor 1 includes a casing 2, a piezoelectric device 3, a sound absorbing member 4, a reinforcing member 5, a supporting member 6, a cushioning member 7, a sealing member 8, a flexible substrate 9, a terminal holder 10, and pin terminals 11A and 11B.

The casing 2 has a closed-end tube shape in which a lower end side (front surface) in Fig. 1(A) is closed and an upper end side (back surface) in Fig. 1(A) is open. The casing 2 includes a tubular side wall 2A and a disc-shaped bottom plate 2B. The casing 2 is, for example, a highly elastic, lightweight aluminum forged body. The material of the casing 2 is not limited to an electrically conductive material such as aluminum and may be an insulating material.

The side wall 2A has a small thickness on the opening side so as to have a large inner diameter and a large thickness on the bottom plate side so as to have a small inner diameter. The bottom plate 2B has a recess 2B1 and stepped portions 2B2. The recess 2B1 extends in such a manner that the width extends in a predetermined direction (lateral direction in Fig. 1(B)) and the length extends in a direction perpendicular to the width. More specifically, the recess 2B1 extends so that the both ends in length reach the side wall 2A. The stepped portions 2B2 are on both sides of the recess 2B1 in width in such a manner as to rise from the recess 2B1. The bottom surface of the recess 2B1 serves as a main vibration area of the casing 2 and thus the ultrasonic sensor 1 has a directivity that is short in length of the recess 2B1 but wide in width of the recess 2B1.

The piezoelectric device 3 has a flat shape. When the piezoelectric device 3 receives a driving voltage between upper and lower surfaces, the piezoelectric device 3 expands in an in-plane direction and vibrates. The piezoelectric device 3 is disposed inside the recess 2B1 of the casing 2 and attached to the bottom plate 2B. The piezoelectric device 3 and the bottom plate 2B are coupled with each other to form a unimorph vibrating element and thus the bottom plate 2B (recess 2B1) bends and vibrates upward and downward in Fig. 1(A) as a result of the expansion and vibrations of the piezoelectric device 3.

The sound absorbing member 4 is a flat member made of, for example, polyester felt, and is provided to absorb an unnecessary sound wave that would pass through from the piezoelectric device 3 to the opening of the casing 2. The sound absorbing member 4 is disposed inside the recess 2B1 of the casing 2 and stacked on and attached to the piezoelectric device 3.

The reinforcing member 5 is a ring-shaped body member having an opening at the center and has high acoustic impedance. Specifically, the reinforcing member 5 is made of a material having a higher density or rigidity than the material of the casing 2, such as stainless steel or zinc, so as to serve as a weight. Here, the reinforcing member 5 may be made of a material (aluminum) the same as the material of the casing 2 having an adjusted size such as the thickness. The reinforcing member 5 is disposed on the bottom plate 2B of the casing 2 so as to be in contact with the inner periphery of the thick portion of the side wall 2A. This provision of the reinforcing member 5 increases the rigidity of the surrounding of the recess 2B1 of the casing 2, thereby enabling minimization of vibration transmission from the bottom plate 2B of the casing 2 to the side wall 2A of the casing 2.

The supporting member 6 is a ring-shaped member with an opening at the center and made of a polyurethane, which is a viscoelastic material. The supporting member 6 is fabricated by inserting a mold, used for shaping, into the casing, filling the casing with a polyurethane until the polyurethane is cured, and then pulling out the mold. The supporting member 6 serves as one of vibration dampers in this embodiment. The supporting member 6 is provided to support the cushioning member 7, described below, without the cushioning member 7 being in contact with the casing 2. This provision of the supporting member 6 can minimize vibration transmission to the cushioning member 7 through the side wall 2A.

The cushioning member 7 is a cup-shaped body member made of a polyurethane, which is a viscoelastic material, and serves as one of vibration dampers in this embodiment. The cushioning member 7 has a protrusion at a lower portion and an opening above the protrusion. The protrusion is fitted into the opening of the reinforcing member 5 and the opening of the cushioning member 7 receives a terminal holder 10, which will be described below. This provision of the cushioning member 7 minimizes vibration transmission to the terminal holder 10 through the side wall 2A.

The terminal holder 10 is an L-shaped body member made of resin such as polybutylene terephthalate (PBT). The terminal holder 10 holds pin terminals 11A and 11B, described below, so that the pin terminals 11A and 11B are positioned so as to extend parallel to the axis passing through the center of the opening of the casing 2. The terminal holder 10 is bent at the lower portion so as to be fitted to the above-described cushioning member 7. The terminal holder 10 has a protrusion at the bottom. The terminal holder 10 also has a window portion in the middle portion through which the pin terminals 11A and 11B are exposed.

The pin terminals 11A and 11B are straight metal pins to which a driving voltage is applied and held by the terminal holder 10. Lower end portions of the pin terminals 11A and 11B are disposed inside the opening of the casing 2 so as to be exposed through the window of the terminal holder 10. Upper end portions of the pin terminals 11A and 11B protrude from the upper end of the terminal holder 10 to be disposed outside the casing 2.

The flexible substrate 9 is a wiring portion of a wide strip shape and wires the piezoelectric device 3 to the pin terminals 11A and 11B. The flexible substrate 9 has a first end portion that is wired to the pin terminals 11A and 11B while extending in the same direction as the lower end portions of the pin terminals 11A and 11B. The flexible substrate 9 also has a second end portion that is bent with respect to the first end portion and drawn in the radial direction of the casing 2 to be wired to the upper surface of the piezoelectric device 3 with an electrically conductive adhesive. By wiring the flexible substrate 9 to the piezoelectric device 3 with the electrically conductive adhesive, the weight of a wiring connection portion can be reduced further than in the case where a lead wire is soldered. Thus, the piezoelectric device 3 can vibrate in a substantially ideal vibration state.

The sealing member 8 is made of a polyurethane, which is a viscoelastic material, and serves as one of vibration dampers in this embodiment. The sealing member 8 is inserted into the casing 2 so as to seal the flexible substrate 9 and the lower end portions of the pin terminals 11A and 11B disposed inside the opening of the casing 2. Here, since the supporting member 6 and the cushioning member 7 occupy a space of the casing 2 on the bottom-plate side, the sealing member 8 is inserted into only a space of the casing 2 on the opening side. The sealing member 8 has the function of minimizing the vibrations of the side wall 2A of the casing 2 as well as the function of stopping the supporting member 6 or the cushioning member 7 from coming out of the casing 2.

In the ultrasonic sensor 1 having this configuration, the vibrations of the casing 2 are damped by the sound absorbing member 4, the supporting member 6, the cushioning member 7, and the sealing member 8, whereby the vibrations are negligibly transmitted to the terminal holder 10 and the pin terminals 11A and 11B. In addition, the sealing member 8, the supporting member 6, and the cushioning member 7 reduce (regulate) the vibrations of the side wall 2A of the casing 2, whereby unnecessary reverberations of the casing 2 can be minimized. Consequently, the vibration transmission that occurs when the pin terminals 11A and 11B are mounted on an external substrate is significantly reduced.

Here, all of the sealing member 8, the supporting member 6, and the cushioning member 7 may be made of a polyurethane that satisfies a desired loss modulus versus temperature characteristic to serve as a vibration damper for reducing (regulating) the vibrations of the casing 2. However, provided that at least one of the members 6, 7, and 8 serves as a vibration damper, the other members may be made of a material such as a silicone resin (silicone rubber).

For example, only the supporting member 6 may be used as a vibration damper and the sealing member 8 and the cushioning member 7 may be used to intercept vibration transmission to the pin terminals 11A and 11B. In that case, it is preferable that the sealing member 8 and the cushioning member 7 have lower moduli of elasticity than the supporting member 6. More specifically, the modulus of elasticity has an elastic modulus and a loss modulus and it is preferable that the sealing member 8 and the cushioning member 7 have low elastic moduli and the supporting member 6 have a high loss modulus.

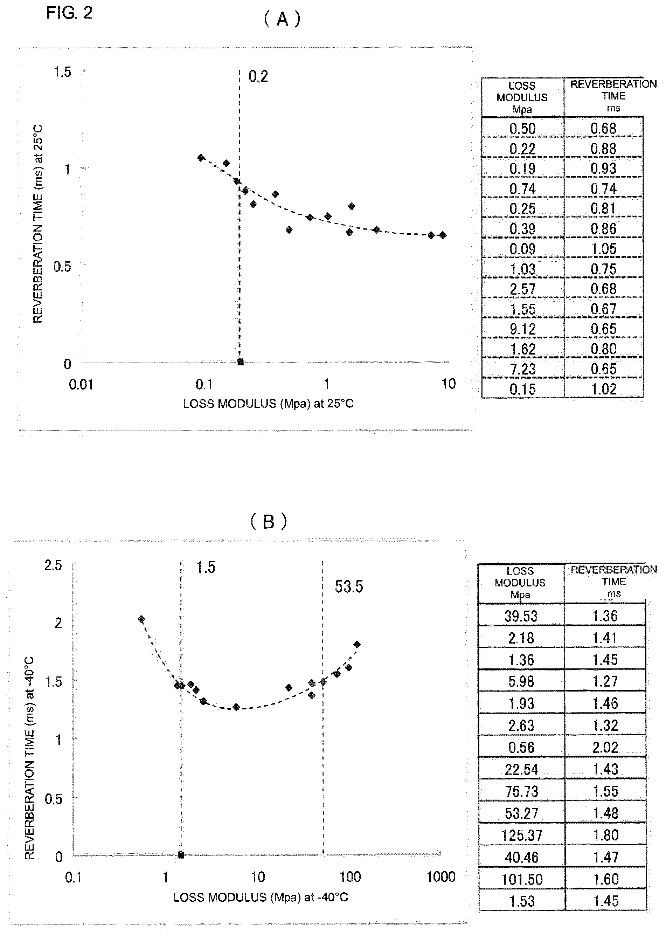

Fig. 2 illustrates the relationship between the loss modulus and the reverberation time in one vibration damper (supporting member 6). Fig. 2(A) shows the reverberation time at a room temperature (25°C) and Fig. 2(B) shows the reverberation time at a very low temperature (-40°C).

The reverberation time was measured at various different loss moduli using different materials of the vibration damper. At the room temperature (25°C), the reverberation time decreased as the loss modulus increased in such a manner that the loss modulus and the reverberation time are inversely proportional to each other. At the very low temperature (-40°C), on the other hand, the loss modulus and the reverberation time showed a quadratic change in such a manner that the reverberation time takes extrema in accordance with the loss modulus.

Specifically, at the room temperature, as the loss modulus changed from low to high up to approximately 0.2 Mpa, the reverberation time decreased steeply. After the loss modulus exceeded approximately 0.2 Mpa, the reverberation time decreased gently and became substantially constant.

At the very low temperature, as the loss modulus changed from low to high up to approximately 1.5 Mpa, the reverberation time decreased steeply. After the loss modulus exceeded approximately 1.5 Mpa, the reverberation time decreased gently. When the loss modulus was approximately 6 Mpa, the reverberation time took the lower limit extremum, which is 1.268 ms. After the loss modulus exceeded approximately 53.5 Mpa, the reverberation time steeply increased again.

These measurement results show that a material having a loss modulus exceeding at least 0.2 Mpa at the room temperature should be used for a vibration damper since the reverberation time of materials having a loss modulus below 0.2 Mpa at the room temperature changes to a large extent to an undesired level.

At the very low temperature, the reverberation time of materials having a loss modulus below 1.5 Mpa changes to a large extent to an undesired level. In addition, the reverberation time of materials having a loss modulus exceeding 53.5 Mpa changed to a large extent to an undesired level. These results show that a material having a loss modulus exceeding at least 1.5 Mpa but below 53.5 Mpa at the very low temperature should be used for a vibration damper.

Now, examples of polyurethanes that exhibit various different loss modulus versus temperature characteristics are described. The examples are fabricated by changing manufacturing conditions so as to satisfy the above-described loss modulus conditions at both the room temperature and the very low temperature. For comparison of the operation effects, comparative examples made of materials that do not satisfy the above-described loss modulus conditions are also described.

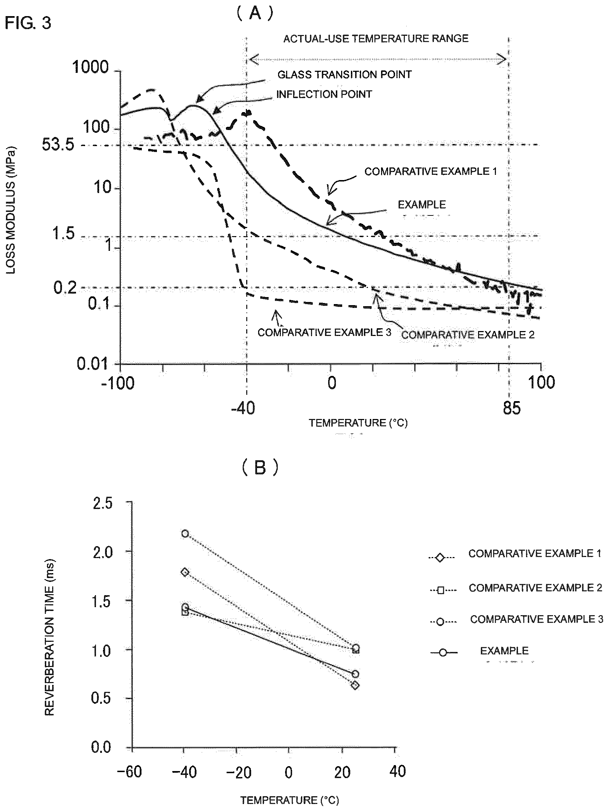

Fig. 3(A) is a graph showing the relationship between the loss modulus and the temperature of each material. The data shown in Fig. 3(A) is obtained by measuring, at different temperatures, the loss modulus of test pieces made of different materials. Each test piece was sized 10 × 12×3 mm (here, the length 12 mm is a distance between chucks in the test device). Each test piece was deformed periodically at the frequency of 10 Hz. The measured temperature ranged from -100°C to 130°C. The measurement of the loss modulus was started at the temperature of -100°C and the temperature was increased at a rate of 4°C/min.

A comparative example 1 is a polyurethane that does not satisfy the conditions according to the present invention. The polyurethane is a mixture of an inorganic filler and a polyol-based polyurethane, which is a base material, subjected to curing under the standard curing conditions. When the temperature was increased from -100°C, this polyurethane according to the comparative example 1 showed the peak in the loss modulus versus temperature characteristic around approximately -40°C, which is the glass-transition point and which is the lower limit temperature of the actual-use temperature range. Here, the loss modulus was approximately 125.37 Mpa. When the temperature was further increased from this temperature, the loss modulus gradually decreased and showed approximately 1.45 Mpa at the room temperature (25°C).

As described above, although the polyurethane according to the comparative example 1 has an appropriate loss modulus exceeding 0.2 Mpa at the room temperature, the polyurethane has a loss modulus of as high as 53.5 Mpa at the very low temperature. This polyurethane is thus too rigid to minimize the reverberations at the very low temperature.

A comparative example 2 is a polyurethane that does not satisfy the conditions according to the present invention. The polyurethane is a mixture of an inorganic filler and a polyol-based polyurethane, which is a base material, subjected to curing under the standard curing conditions. Here, in order for the polyurethane to satisfy the loss modulus conditions at the very low temperature, the polyurethane was fabricated by changing the manufacturing conditions of the comparative example 1 in terms of the composition of polyol so that the glass-transition temperature is significantly shifted to the lower side than that in the case of an example, which will be described below. When the temperature was increased from -100°C, the polyurethane according to the comparative example 2 showed the peak in the loss modulus versus temperature characteristic around approximately -85°C, which is the glass-transition point. When the temperature was further increased from this temperature, the loss modulus gradually decreased and took approximately 2.06 Mpa at the temperature of approximately -40°C, which is the lower limit of the actual-use temperature range. When the temperature was further increased from this temperature, the loss modulus took approximately 0.16 Mpa at the room temperature (25°C).

As described above, the polyurethane according to the comparative example 2 has a loss modulus exceeding 1.5 Mpa and below 53.5 Mpa at the very low temperature but has a loss modulus below 0.2 Mpa at the room temperature. Consequently, the polyurethane was too soft to minimize the reverberations at the room temperature.

A comparative example 3 is a silicone resin that does not satisfy the conditions according to the present invention. The resin is a mixture of an inorganic filler and a silicone, which is a base material, subjected to curing under the standard curing conditions. When the temperature was increased from -100°C, the silicone resin according to the comparative example 3 showed the peak in the loss modulus versus temperature characteristic around approximately -80°C, which is the glass-transition point. When the temperature was further increased from this temperature, the loss modulus decreased steeply and then became stable. At the temperature of -40°C, which is the lower limit of the actual-use temperature range, the loss modulus took approximately 0.17 Mpa. When the temperature was further increased from this temperature, the loss modulus took approximately 0.09 Mpa at the room temperature (25°C).

As described above, the silicone resin according to the comparative example 3 has a loss modulus below 0.2 Mpa at the room temperature and a loss modulus below 1.5 Mpa at the very low temperature. Consequently, the resin was not appropriate to minimize the reverberations because of being too soft.

A polyurethane according to an example, on the other hand, satisfies the conditions according to the present invention. The polyurethane has a glass-transition temperature that is shifted from the lower limit temperature of the actual-use temperature range to the lower side to some degrees so as to exclude, from the actual-use temperature range, the range of temperature up to the point of inflection (a point on a curve at which the second derivative changes sign) that is on the high-temperature side of the peak in the loss modulus versus temperature characteristic, the peak having the glass-transition temperature at the center. Alternatively, in the polyurethane, the temperature range corresponding to a width of 3 dB with respect to the glass-transition temperature lies at a sufficient distance from the actual-use temperature range.

The polyurethane is a mixture of an inorganic filler and a polyol-based polyurethane, which is a base material, subjected to curing under the standard curing conditions. Here, the composition of polyol is changed so that the glass-transition temperature is shifted to the lower side to some degrees. When the temperature was increased from -100°C, the polyurethane according to the example showed the peak in the loss modulus versus temperature characteristic around a temperature between approximately -60°C to -70°C, which is the glass-transition point. When the temperature was further increased from this temperature, the loss modulus decreased and took approximately 21.40 Mpa at the temperature of approximately -40°C, which is the lower limit temperature of the actual-use temperature range. When the temperature was further increased from this temperature, the loss modulus gradually decreased and took approximately 0.88 Mpa at the room temperature (25°C).

As described above, the polyurethane according to the example has an appropriate loss modulus exceeding 0.2 Mpa at the room temperature and an appropriate loss modulus exceeding 1.5 Mpa and below 53.5 Mpa at the very low temperature and found to be appropriately soft to minimize reverberations.

As is clear from the example and the comparative examples described above, controlling the loss modulus of a polyurethane enables the polyurethane to have properties that can satisfy the conditions at both the room temperature and the very low temperature relating to the loss modulus versus temperature characteristic.

The following describes the reverberation time at the room temperature and the reverberation time at the very low temperature according to the example and the comparative examples.

Fig. 3(B) is a graph showing the reverberation time at the room temperature and the reverberation time at the very low temperature according to the example and the comparative examples.

In the case of an ultrasonic sensor using the polyurethane according to the example, the reverberation time at the room temperature was approximately 0.75 ms whereas the reverberation time at the very low temperature was approximately 1.43 ms.

On the other hand, in the case of an ultrasonic sensor using the polyurethane according to the comparative example 1, the reverberation time at the room temperature (approximately 25°C) was approximately 0.65 ms whereas the reverberation time at the very low temperature (approximately -40°C) was approximately 1.80 ms. In the case of an ultrasonic sensor using the polyurethane according to the comparative example 2, the reverberation time at the room temperature was approximately 1.01 ms whereas the reverberation time at the very low temperature was approximately 1.40 ms. In the case of an ultrasonic sensor using the silicone resin according to the comparative example 3, the reverberation time at the room temperature was approximately 1.05 ms whereas the reverberation time at the very low temperature was approximately 2.20 ms.

The comparative example 1 had a poor reverberation characteristic at the very low temperature. The comparative example 2 had a poor reverberation characteristic at the normal temperature. The comparative example 3 had poor reverberation characteristics at the normal temperature and the very low temperature. On the other hand, the ultrasonic sensor using the polyurethane according to the example accomplished a favorably short reverberation time at both the very low temperature and the normal temperature.

As described above, in the ultrasonic sensor according to the embodiment, a desired loss modulus versus temperature characteristic can be obtained by using a polyurethane having a controlled loss modulus in a vibration damper. Thus, the reverberation time can be reduced to a favorable level throughout the entire actual-use temperature range.

### Second Embodiment

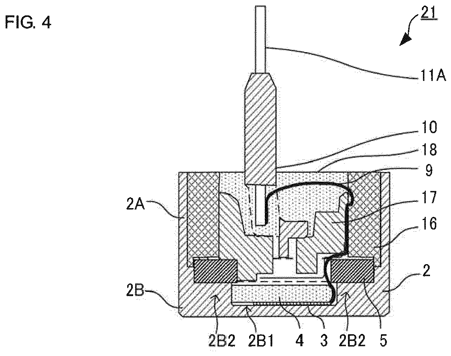

Now, an ultrasonic sensor according to a second embodiment of the present invention will be described. Fig. 4 is a cross-sectional view of the ultrasonic sensor 21 according to the embodiment. The ultrasonic sensor 21 is different from the sensor according to the first embodiment in terms of the shapes of a supporting member 16, a cushioning member 17, and a sealing member 18. Specifically, the supporting member 16 remains unchanged in terms of being ring-shaped and fabricated by curing a polyurethane but has such a length as to reach the opening surface of the casing 2. The cushioning member 17 is inserted with pressure into the opening of the supporting member 16 and fixed to the opening. The sealing member 18 is inserted into the opening of the supporting member 16.

In this manner, even though the ultrasonic sensor 21 has a specific shape different from that of the sensor according to the first embodiment, the present invention is applicable to the second embodiment in the same manner as in the case of the first embodiment. Specifically, provided that at least one of the supporting member 16, the cushioning member 17, and the sealing member 18 is made of a polyurethane having a glass-transition temperature so controlled that a desired loss modulus versus temperature characteristic is obtained, the reverberation time can be minimized throughout the entire actual-use temperature range.

The present invention can be embodied in the manner as described in the embodiments. However, the specific configuration of an ultrasonic sensor embodying the present invention is not limited to the examples described above. For example, components such as the cushioning member, the supporting member, the reinforcing member, the sound absorbing member, and the sealing member may have any specific shape or contain any material. Providing at least one member as a vibration damper will suffice and other members, such as a cushioning member, a supporting member, a reinforcing member, a sound absorbing member, and a sealing member do not necessarily have to be provided. The configuration of the casing is not limited to those of the examples described above. The casing may contain any material or have any shape.

### Reference Signs List

- 1, 21: ultrasonic sensor
- 2: casing
- 2A: side wall
- 2B: bottom plate
- 2B1: recess
- 2B2: stepped portion
- 3: piezoelectric device
- 4: sound absorbing member
- 5: reinforcing member
- 6: supporting member
- 7: cushioning member
- 8: sealing member
- 9: flexible substrate
- 10: terminal holder
- 11A, 11B: pin terminal
- 16: supporting member
- 17: cushioning member
- 18: sealing member

## Claims

1. An ultrasonic sensor (1,21), comprising:
a closed-end tubular casing (2) having a vibration area at a bottom surface;
a piezoelectric device (3) disposed in an opening of the casing and attached to the vibration area;
a terminal portion (10) having an end portion that is disposed in the opening of the casing, the terminal portion extending from inside the opening of the casing (2) to outside the opening of the casing (2); and
a vibration damper (6, 7, 8, 16, 17, 18) mainly containing a mixture of inorganic filler and a polyol-based polyurethane, and inserted into the opening of the casing (2),
wherein the vibration damper (6, 7, 8, 16, 17, 18) having:
a glass-transition temperature lower than the lower limit temperature of an actual-use temperature range, and
a loss modulus versus temperature characteristic having a peak centered at the glass transition temperature, wherein a point of inflection located on a high-temperature side of the peak is out of the actual-use temperature range;
wherein the vibration damper (6, 7, 8, 16, 17, 18) has a loss modulus exceeding 0.2 Mpa at room temperature of 25°C
wherein the vibration damper (6, 7, 8, 16, 17, 18) has a loss modulus below 53.5 Mpa throughout the entire actual-use temperature range;
wherein the vibration damper (6, 7, 8, 16, 17, 18) has a loss modulus versus temperature characteristic in which a temperature range corresponding to a width of 3 dB at the peak lies below the lower limit temperature of the actual-use temperature range, the peak having the glass-transition temperature at the center;
wherein the vibration damper (6, 7, 8, 16, 17, 18) has a loss modulus exceeding 1.5 Mpa at the lower limit temperature of the actual-use temperature range; and
wherein the actual use temperature range is between -40°C and 85°C.

## Patentansprüche

1. Ultraschallsensor (1, 21), der Folgendes aufweist:
ein geschlossenendiges rohrförmiges Gehäuse (2) mit einem Schwingungsbereich an einer unteren Oberfläche;
eine piezoelektrische Vorrichtung (3), die in einer Öffnung des Gehäuses angeordnet ist und am Schwingungsbereich angebracht ist;
einen Anschlussteil (10) mit einem Endteil, der in der Öffnung des Gehäuses angeordnet ist, wobei der Anschlussteil sich vom Inneren der Öffnung des Gehäuses (2) zur Öffnung des Gehäuses (2) hinauserstreckt; und
einen Schwingungsdämpfer (6, 7, 8, 16, 17, 18), der hauptsächlich ein Gemisch aus anorganischem Füllstoff und einem Polyurethan auf Polyolbasis enthält und in die Öffnung des Gehäuses (2) eingesetzt ist,
wobei der Schwingungsdämpfer (6, 7, 8, 16, 17, 18) Folgendes hat:
eine Glasübergangstemperatur, die niedriger als die untere Grenztemperatur eines tatsächlichen Anwendungstemperaturbereichs ist, und
eine Verlustmodul-gegen-Temperatur-Kennlinie, die eine an der Glasübergangstemperatur zentrierte Spitze hat, wobei ein Wendepunkt, der auf einer Hochtemperaturseite der Spitze liegt, außerhalb des tatsächlichen Anwendungstemperaturbereichs ist;
wobei der Schwingungsdämpfer (6, 7, 8, 16, 17, 18) einen Verlustmodul hat, der 0,2 MPa bei 25 °C Raumtemperatur übersteigt,
wobei der Schwingungsdämpfer (6, 7, 8, 16, 17, 18) im gesamten tatsächlichen Anwendungstemperaturbereich einen Verlustmodul unter 53,5 MPa hat;
wobei der Schwingungsdämpfer (6, 7, 8, 16, 17, 18) eine Verlustmodul-gegen-Temperatur-Kennlinie hat, bei der ein Temperaturbereich, der einer Breite von 3 dB an der Spitze entspricht, unterhalb der unteren Grenztemperatur des tatsächlichen Anwendungstemperaturbereichs liegt, wobei die Spitze die Glasübergangstemperatur in ihrer Mitte hat;
wobei der Schwingungsdämpfer (6, 7, 8, 16, 17, 18) einen Verlustmodul hat, der bei der unteren Grenztemperatur des tatsächlichen Anwendungstemperaturbereichs 1,5 MPa übersteigt; und
wobei der tatsächliche Anwendungstemperaturbereich zwischen -40 und 85 °C ist.

## Revendications

1. Capteur à ultrasons (1, 21), comprenant :
un boîtier tubulaire à extrémités fermées (2) ayant une zone de vibration à une surface inférieure ;
un dispositif piézoélectrique (3) disposé dans une ouverture du boîtier et attaché à la zone de vibration ;
une partie de borne (10) ayant une partie d'extrémité qui est disposée dans l'ouverture du boîtier, la partie de borne s'étendant de l'intérieur de l'ouverture du boîtier (2) jusqu'à l'extérieur de l'ouverture du boîtier (2) ; et
un amortisseur de vibration (6, 7, 8, 16, 17, 18) contenant essentiellement un mélange de matière de remplissage inorganique et un polyuréthane à base de polyol, et introduit dans l'ouverture du boîtier (2),
dans lequel l'amortisseur de vibration (6, 7, 8, 16, 17, 18) ayant :
une température de transition vitreuse plus basse que la température limite inférieure d'une plage de température d'utilisation réelle, et
un module de perte par rapport à une caractéristique de température ayant un pic centré à la température de transition vitreuse, où un point d'inflexion situé sur un côté à température élevée du pic est hors de la plage de température d'utilisation réelle ;
dans lequel l'amortisseur de vibration (6, 7, 8, 16, 17, 18) a un module de perte dépassant 0, 2 MPa à une température ambiante de 25 °C ;
dans lequel l'amortisseur de vibration (6, 7, 8, 16, 17, 18) a un module de perte inférieur à 53,5 MPa à travers la plage entière de température d'utilisation réelle ;
dans lequel l'amortisseur de vibration (6, 7, 8, 16, 17, 18) a un module de perte par rapport à une caractéristique de température dans lequel une plage de température correspondant à une largeur de 3 dB au pic se trouve au-dessous de la température limite inférieure de la plage de température d'utilisation réelle, le pic ayant la température de transition vitreuse au centre ;
dans lequel l'amortisseur de vibration (6, 7, 8, 16, 17, 18) a un module de perte dépassant 1,5 MPa à la température limite inférieure de la plage de température d'utilisation réelle ; et
dans lequel la plage de température d'utilisation réelle est entre -40 °C et 85 °C.
